# EUROPÄISCHE PATENTSCHRIFT

(11) **EP 2 865 043 B1**
(45) Veröffentlichungstag und Bekanntmachung des Hinweises auf die Patenterteilung: **20.04.2016**
(21) Anmeldenummer: 13729336.1
(22) Anmeldetag: 17.06.2013
(51) Int. Cl.: H01M 10/42, H01M 10/46, H01M 10/48, B60L 11/18, H02J 7/00, H02J 7/14

(54) **BATTERIE MIT MINDESTENS EINER HALBLEITERBASIERTEN TRENNEINRICHTUNG**
BATTERY COMPRISING AT LEAST ONE SEMICONDUCTOR-BASED SEPARATING DEVICE
BATTERIE COMPRENANT AU MOINS UN DISPOSITIF DE SÉPARATION À SEMI-CONDUCTEURS

(30) Priorität: 22.06.2012 DE 102012210602
(43) Veröffentlichungstag der Anmeldung: 29.04.2015
(73) Patentinhaber: Robert Bosch GmbH, 70442 Stuttgart (DE); Samsung SDI Co., Ltd., Yongin-si, Gyeonggi-do 446-577 (KR)
(72) Erfinder: FINK, Holger, 70567 Stuttgart (DE)
(74) Vertreter: Bee, Joachim
(86) Internationale Anmeldenummer: PCT/EP2013/062486
(87) Internationale Veröffentlichungsnummer: WO 2013/189875

(56) Entgegenhaltungen:
- EP-A1- 2 405 565
- EP-A2- 2 408 053
- DE-A1-102010 027 856
- DE-A1-102010 027 861
- DE-A1-102010 041 014
- US-A1- 2010 305 792
- US-A1- 2011 118 916

## Beschreibung

Die vorliegende Erfindung betrifft eine Batterie mit mindestens einem Batteriestrang, wobei in dem Batteriestrang mehrere in Reihe schaltbare Batteriemodule mit jeweils mindestens einer Batteriezelle angeordnet sind, der Batteriestrang mittels mindestens einer dem Batteriestrang zugeordneten Trenneinrichtung zwischen den ihm zugeordneten Batteriestrangterminals zuschaltbar und von den ihm zugeordneten Batteriestrangterminals entkoppelbar ist und die Batterie mit einem Elektromotor verbindbar ist. Ferner betrifft die Erfindung ein Fahrzeug mit einer solchen Batterie.

### Stand der Technik

Üblicherweise werden Batterien für den Einsatz in Hybrid- und Elektrofahrzeugen als Traktionsbatterien bezeichnet, da sie für die Speisung elektrischer Antriebe eingesetzt werden. Solche Batterien sind beispielsweise aus den Dokumenten DE 10 2010 027 856 A1 und DE 10 2010 041 014 A1 bekannt.

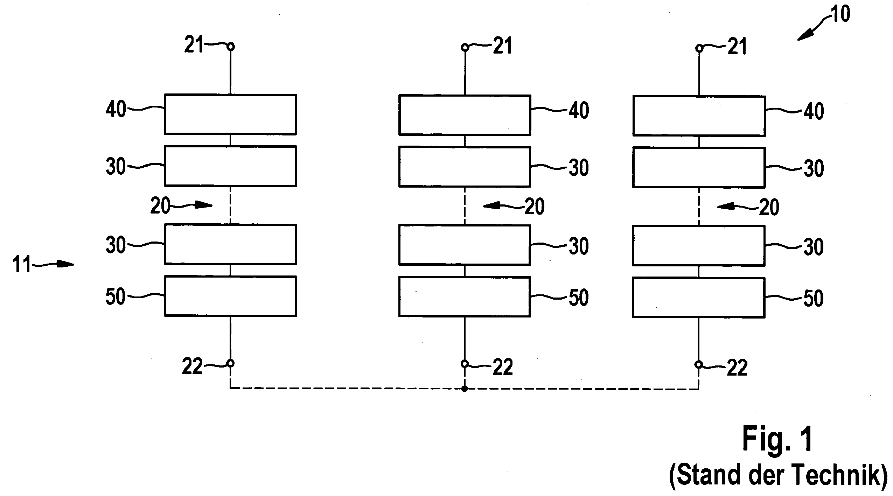

In früheren Patentanmeldungen der Anmelderin wurden mehrphasige Batteriesysteme mit stufig einstellbaren Ausgangsspannungen beschrieben. Das Blockschaltbild eines solchen Batteriesystems ist in der Figur 1 dargestellt. Gemäß Figur 1 umfasst ein Batteriesystem 10 eine Batterie 11, deren Batteriezellen nicht lediglich in Reihe geschaltet werden, sondern das aus mehreren Batteriesträngen 20 aufgebaut ist, die jeweils zwischen einem positiven Batteriestrangpol 21, der im Folgenden auch als positives Batteriestrangterminal 21 bezeichnet wird, und einem negativen Batteriestrangpol 22, der im Folgenden auch als negatives Batteriestrangterminal 22 bezeichnet wird, zuschaltbar sind.

Dabei sind die Batteriestränge 20 der Batterie 11 jeweils aus mehreren Batteriemodulen 30 mit in Serie und/oder parallel geschalteten Batteriezellen (nicht dargestellt) aufgebaut. Diese Module 30 können über sogenannte Koppeleinheiten (nicht dargestellt) in den jeweiligen Strang 20 zugeschaltet oder aber überbrückt werden. Derartige Batteriesysteme 11 werden in einer dreiphasigen Ausführung auch als Batteriedirektinverter bezeichnet.

Um einen Batteriedirektkonverter in einem Traktionsantrieb über einen Gleichspannungskreis mit Zwischenkreiskondensator an einen Inverter zu koppeln, wird üblicherweise noch eine sogenannte Lade- und Trenneinrichtung 40 sowie eine zweite Trenneinrichtung 50 eingesetzt.

Die in den Batteriesträngen 20 jeweils angeordneten Trenneinrichtungen 40, 50 sind zuständig für die elektrische Trennung der Batteriestränge 20 und dadurch der Batterie 10 von einem entsprechenden Gleichspannungszwischenkreis. Aus dem Stand der Technik ist es bekannt, als Trennelement Schütze einzusetzen.

Bei der von der Lade- und Trenneinrichtung 40 umfassten Ladeeinrichtung (nicht separat dargestellt) handelt es sich um eine Einrichtung zum Laden eines entsprechenden Gleichspannungszwischenkreiskondensators, mit der die Ladeströme auf zulässige Werte begrenzt werden können. Aus dem Stand der Technik ist es bekannt, hierfür eine Serienschaltung (nicht dargestellt) aus einem Ladeschütz und einem Vorladewiderstand einzusetzen. Die in der Lade- und Trenneinrichtung 40 sowie in der zweiten Trenneinrichtung 50 zum Einsatz kommenden Bauelemente sind verhältnismäßig groß, schwer und weisen eine hohe Ausfallrate auf. So sind heute die dort eingesetzten Relais und Schütze nach der Starterbatterie die zweithäufigste Ursache von Fehlern in elektrischen Bordnetzen.

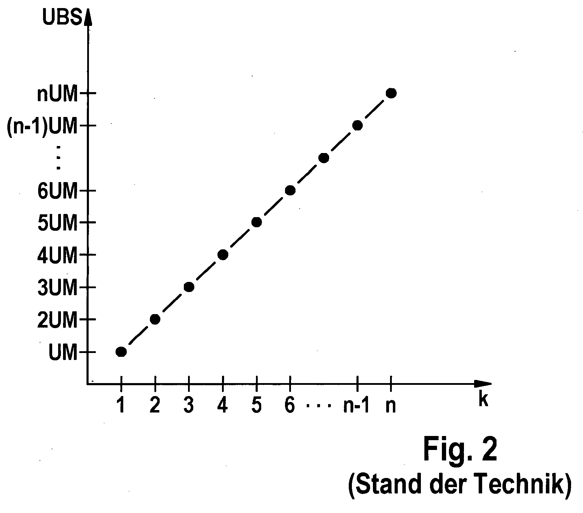

Figur 2 zeigt die Ausgangsspannung UBS eines jeweiligen Batteriestranges 20 der in der Figur 1 dargestellten Batterie 10 in Abhängigkeit von der Anzahl k der zu einem entsprechenden Batteriestrang 20 der Batterie 10 zugeschalteten Batteriemodule 30. Die schwarzen Punkte (nicht gekennzeichnet) stellen die einzelnen Messpunkte dar. Die zu jedem Batteriestrang 20 zugeschalteten Batteriemodule 30 weisen hier jeweils die gleiche Modulspannung UM auf. Die in der Abhängigkeit von der zugeschalteten Anzahl k von Batteriemodulen 30 dargestellte Ausgangsspannung UBS eines entsprechenden Batteriestranges 20 ist linear und folgt der Relation UBS = k· UM, wobei 1 < k < n. Dabei ist n die maximale Anzahl der Batteriemodule 30, die zu einem Batteriestrang 20 jeweils zugeschaltet werden können. Die maximale Ausgangsspannung UBS eines jeden Batteriestranges 20 kann dann entsprechend den Wert n· UM annehmen.

Die EP 2 408 053 A3 offenbart ein Batteriemanagementsystem mit einer Vielzahl an zu einem Batteriestrang zusammengeschalteter Batteriemodule, wobei jedes Batteriemodul einen Batteriemodulschaltkreis aufweist.

Die US 2010/305792 A1 offenbart ein System mit einem Batteriemodulstrang, in welchem Schaltmittel angeordnet sind, mittels welcher der Batteriemodulstrang von seinen Batteriestrangterminals entkoppelbar beziehungsweise zu diesen zuschaltbar ist. Bei den Schaltmitteln handelt es sich um IGBTs beziehungsweise Bipolartransistoren.

Die EP 2 405 565 A1 offenbart einen Pulsstromrichter, welcher einem in einem Strang angeordneten Zwischenkreiskondensator nachgeschaltet ist, wobei der Pulsstromrichter sechs Halbleiterschaltmittel mit jeweils einer diesen jeweils zugeordneten Freilaufdiode aufweist.

Die US 2011/118916 A1 offenbart einen Batteriestrang mit einer Vielzahl an Batterien, wobei je Batterie ein Schaltmittel im Batteriestrang vorgesehen ist, mittels welchem die jeweilige Batterie von mindestens einem der Batteriestrangterminals abtrennbar ist.

Die DE 10 2010 027861 A1 beschreibt eine Koppeleinrichtung mit mehreren Schaltmitteln, die als Halbleiterschalter, z. B. als MOSFETS oder IGBTs verwirklicht sind.

DE 10 2010 027856 A1 beschreibt eine Batterie mit Batteriezellensträngen, welche jeweils eine Vielzahl an Batteriezellen aufweisen und über einen Gleichspannungszwischenkreis sowie über einen Pulswechselrichter mit Halbleiterventilen und Freilaufdioden mit einem Elektromotor verbindbar sind. Die Batterie umfasst eine Trenneinrichtung mit einem als Schütz ausgeführten Schaltmittel.

Die DE 10 2010 041014 A1 offenbart ein Batteriesystem mit einem Batteriemodulstrang, der eine Mehrzahl von in Serie geschalteten Batteriemodulen aufweist. Jedes Batteriemodul umfasst eine Koppeleinheit, welche jeweils dazu ausgebildet ist, wenigstens eine Batteriezelle zwischen ein erstes Terminal und ein zweites Terminal zu schalten oder von diesen abzukoppeln. Hierzu sind in der Koppeleinheit Halbleiterschalter verbaut, welche als MOSFETs oder IGBTs ausgeführt sind.

### Offenbarung der Erfindung

Erfindungsgemäß wird eine Batterie mit mindestens einem Batteriestrang bereitgestellt, wobei in dem Batteriestrang mehrere in Reihe schaltbare Batteriemodule mit jeweils mindestens einer Batteriezelle angeordnet sind, der Batteriestrang mittels mindestens einer dem Batteriestrang zugeordneten Trenneinrichtung zwischen den ihm zugeordneten Batteriestrangterminals zuschaltbar und von den ihm zugeordneten Batteriestrangterminals entkoppelbar ist. Ferner ist die Batterie mit einem Elektromotor verbindbar. Erfindungsgemäß umfasst die Trenneinrichtung mindestens eine bidirektional sperrfähige Schalteinrichtung mit mindestens einem Halbleiterschalter. In der Trenneinrichtung, im Strompfad eines Batteriestrangstroms, ist ein Halbleiterschalter angeordnet ist. Die Trenneinrichtung ist ferner dazu ausgebildet, mittels Schalten des Halbleiterschalters den Strom durch den Batteriestrang unabhängig von seiner Stromrichtung zu schalten.

Somit wird erfindungsgemäß eine Trenneinrichtung, insbesondere auch eine Lade- und Trenneinrichtung, vorzugsweise für Batteriedirektinverter, zur Verfügung gestellt, bei der anstatt elektromechanischer Bauelemente Halbleiterschalter zum Einsatz kommen. Zusätzlich kann der Vorladewiderstand, welcher für den Ladevorgang des Zwischenkreiskondensators eines entsprechenden Gleichspannungskreises verwendet wird, entfallen.

Erfindungsgemäß werden die aus dem Stand der Technik bekannten Trenneinrichtungen beziehungsweise Lade- und Trenneinrichtungen durch leichtere, kostengünstigere und vor allem zuverlässigere Einheiten auf Halbleiterbasis ersetzt.

Bei einer besonderen Ausführungsform der Erfindung ist der von der erfindungsgemäßen Trenneinrichtung umfasste Halbleiterschalter dazu ausgebildet, einen durch ihn vorwärts fließenden Strom zu jedem beliebigen Zeitpunkt abzuschalten.

Insbesondere ist der von einer Schalteinrichtung einer erfindungsgemäßen Trenneinrichtung umfasste Halbleiterschalter rückwärts nur begrenzt sperrfähig oder nicht sperrfähig. Vorzugsweise umfasst der erfindungsgemäß eingesetzte Halbleiterschalter einen Bipolartransistor, insbesondere einen Bipolartransistor mit isolierter Gate-Elektrode oder einen Feldeffekttransistor, insbesondere einen Metall-Oxid-Halbleiter-Feldeffekttransistor.

Bei einer weiteren sehr vorteilhaften Ausführungsform der Erfindung ist dem von einer erfindungsgemäßen Schalteinrichtung einer Trenneinrichtung umfassten Halbleiterschalter eine von der Trenneinrichtung umfasste Diodenbrücke zugeordnet. Die Diodenbrücke ist dabei mit dem zugeordneten Batteriestrang und ferner auch mit dem zugeordneten Halbleiterschalter derartig verbunden, dass ein durch den Halbleiterschalter fließender Strom immer vorwärts durch den Halbleiterschalter fließt, unabhängig von der Richtung, in der der entsprechende Strom durch den zugeordneten Batteriestrang fließt. Insbesondere ist die dem Halbleiterschalter zugeordnete Diodenbrücke als Vollbrücke aus vier Dioden ausgebildet.

Bei den erfindungsgemäßen Trenneinrichtungen können Leistungshalbleiter eingesetzt werden. Da Leistungsschalter auf Halbleiterbasis, welche einen Strom auch ohne Nulldurchgang über eine Steuerleitung zu beliebigen Zeitpunkten abschalten können, rückwärts nicht sperrfähig sind, wird gemäß der besonderen Ausführungsform insbesondere eine Anordnung mit einer Diodenbrücke gewählt. Hierdurch kann auf eine besonders einfache Weise erreicht werden, dass der Stromfluss durch den Halbleiterschalter immer in Vorwärtsrichtung erfolgt, unabhängig, welche Richtung der Stromfluss durch die Trenneinrichtung hat. Somit kann als Schalter ein gewöhnlicher Halbleiterschalter, beispielsweise ein gewöhnlicher Bipolartransistor, ein Bipolartransistor mit isolierter Gate-Elektrode (IGBT) oder ein Metall-Oxid-Halbleiter-Feldeffekttransistor (MOSFET) zum Einsatz kommen.

Insbesondere ist die erfindungsgemäße Trenneinrichtung derartig in dem Batteriestrang, dem sie zugeordnet ist, angeordnet, dass sie mit dem positiven oder mit dem negativen Batteriestrangterminal verbunden ist. Ferner kann die erfindungsgemäße Trenneinrichtung auch zwischen zwei beliebigen Batteriemodulen des Batteriestrangs, dem sie zugeordnet ist, angeordnet und mit diesen angrenzenden zwei Batteriemodulen jeweils direkt verbunden sein.

Anders ausgedrückt, die erfindungsgemäße Trenneinrichtung kann in dem Batteriestrang, dem sie zugeordnet ist, integriert werden. Dabei kann eine erfindungsgemäße Trenneinrichtung beispielsweise direkt am negativen oder am positiven Pol des entsprechenden Batteriestranges positioniert werden. Auch kann eine erfindungsgemäße Trenneinrichtung an einer beliebigen Stelle auch zwischen den Batteriemodulen des entsprechenden Batteriestranges platziert werden.

Ein Batteriesystem, insbesondere ein Batteriedirektinverter, der eine Batterie mit mehreren Batteriesträngen umfasst, die jeweils erfindungsgemäße Trenneinrichtungen umfassen, kann mittels der erfindungsgemäßen Trenneinrichtungen von einer direkt angeschlossenen Elektromaschine unabhängig von der aktuellen Spannungslage des Batteriesystems sowie unabhängig von dem aktuellen Betriebszustand der Elektromaschine getrennt werden. Aufgrund der im Vergleich zu Schützen sehr viel höheren Zuverlässigkeit der eingesetzten Halbleiterschalter und der zugeordneten Dioden kann die Trennfunktion der erfindungsgemäßen Trenneinrichtungen folglich mit einer deutlich höheren Zuverlässigkeit realisiert werden. Darüber hinaus können das Gewicht sowie das Volumen der erfindungsgemäßen Batterie beziehungsweise des erfindungsgemäßen Batteriesystems reduziert werden. Ein weiterer Vorteil der Erfindung ist, dass die Zuschaltung beziehungsweise Abtrennung der erfindungsgemäßen Batterie beziehungsweise des erfindungsgemäßen Batteriesystems geräuschlos erfolgt. Die Schaltgeräusche der heute eingesetzten Schütze werden als sehr störend empfunden.

Bei einer weiteren bevorzugten Ausführungsform der Erfindung ist mindestens eine mindestens einem Batteriestrang der erfindungsgemäßen Batterie zugeordnete Trenneinrichtung ferner auch als Ladeeinrichtung ausgebildet, die mindestens zwei bidirektionale Schalteinrichtungen umfasst. Dabei ist eine der zwei bidirektionalen Schalteinrichtungen parallel zu einer Reihenschaltung aus der anderen der zwei bidirektionalen Schalteinrichtungen und einem Vorladewiderstand gekoppelt.

Insbesondere sind die Batteriemodule eines Batteriestranges der erfindungsgemäßen Batterie zur Erzeugung einer einstellbaren Ausgangsspannung des Batteriestranges zu dem Batteriestrang zuschaltbar und überbrückbar ausgebildet.

Vorzugsweise ist die erfindungsgemäße Batterie eine Lithium-lonen-Batterie.

Weiterhin wird erfindungsgemäß ein Fahrzeug mit einem Elektromotor bereitgestellt, das die erfindungsgemäße Batterie aufweist.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein aus dem Stand der Technik bekanntes Batteriesystem mit einer Batterie mit drei Batteriesträngen, die jeweils eine Trenn- und Ladeeinrichtung sowie eine weitere Trenneinrichtung umfassen,
Figur 2 ein Verlauf der Ausgangsspannung eines Batteriestranges der in der Figur 1 dargestellten Batterie in Abhängigkeit von der Anzahl der zu dem Batteriestrang zugeschalteten Batteriemodule, gemäß dem Stand der Technik,
Figur 3 ein Batteriesystem mit einer Batterie mit drei Batteriesträngen nach einer ersten Ausführungsform der Erfindung, wobei die Batteriestränge jeweils eine erfindungsgemäße Trenneinrichtung umfassen, und
Figur 4 das detaillierte Blockschaltbild einer Trenneinrichtung für eine Batterie eines Batteriesystems nach der ersten Ausführungsform der Erfindung.

### Ausführungsformen der Erfindung

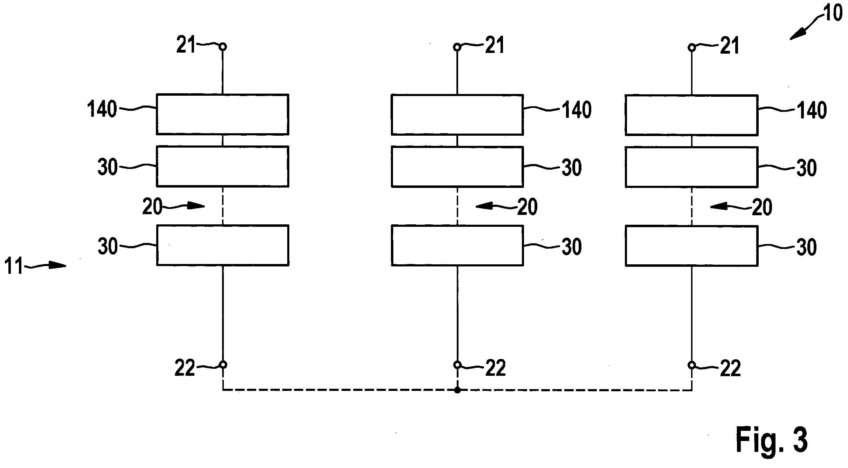

In der Figur 3 ist ein Batteriesystem 10 mit einer Batterie 11 nach einer ersten Ausführungsform der Erfindung dargestellt, wobei die Batterie 11 drei Batteriestränge 20 umfasst, in denen jeweils die erfindungsgemäße Trenneinrichtung 140 angeordnet ist. Die Batteriestränge 20 sind jeweils mittels einer zugeordneten Trenneinrichtung 140 zwischen einem positiven Batteriestrangterminal 21 und einem negativen Batteriestrangterminal 22 zuschaltbar. Dabei sind die Trenneinrichtungen 140 in der Darstellung aus der Figur 3 jeweils direkt an den positiven Batteriestrangpolen 21 angeordnet.

Jeder Batteriestrang 20 umfasst mehrere Batteriemodule 30, von denen in der Figur 3 nur zwei Batteriemodule 30 pro Batteriestrang 20 dargestellt werden. Jedes Batteriemodul 30 umfasst dabei mindestens eine Batteriezelle (in der Zeichnung nicht separat dargestellt). Die Batteriemodule 30 können über sogenannte Koppeleinheiten (nicht separat dargestellt) in den jeweiligen Batteriestrang 20 seriell zugeschaltet oder überbrückt werden. Derartige Batteriesysteme 10 werden in einer dreiphasigen Ausführung auch als Batteriedirektinverter bezeichnet.

Die erfindungsgemäßen Trenneinrichtungen 140 umfassen jeweils einen Halbleiterschalter 150 und sind dazu ausgebildet, einen durch sie in einer beliebigen Richtung fließenden Strom zu jedem beliebigen Zeitpunkt abzuschalten.

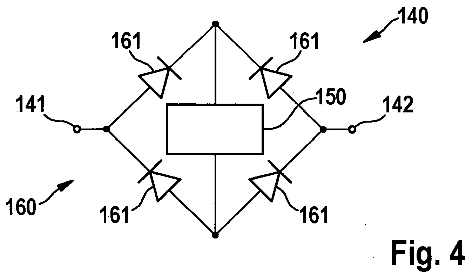

In der Figur 4 ist das detaillierte Blockschaltbild der erfindungsgemäßen Trenneinrichtung 140 für eine Batterie 11 eines Batteriesystems 10 nach der ersten Ausführungsform der Erfindung dargestellt. Dabei sind die erfindungsgemäßen Trenneinrichtungen 140 als bidirektional sperrfähige Schalteinrichtungen basierend auf gängigen Halbleiterschaltern 150 realisiert worden. Die eingesetzten Halbleiterschalter 150 können einen Strom auch ohne Nulldurchgang über eine Steuerleitung zu beliebigen Zeitpunkten abschalten und sind rückwärts nicht sperrfähig. Deswegen wird erfindungsgemäß insbesondere eine Anordnung mit einer Diodenbrücke 160, die als Vollbrücke aus vier Dioden 161 realisiert ist, gewählt. Hierdurch wird erreicht, dass der Stromfluss durch den Halbleiterschalter 150 immer in Vorwärtsrichtung erfolgt, unabhängig davon, in welche Richtung der Stromfluss durch die Trenneinrichtung 140 erfolgt. Die Trenneinrichtung 140 ist an ihren Anschlüssen 141, 142 mit dem entsprechenden Batteriestrang (nicht dargestellt) verbunden.

Die erfindungsgemäß eingesetzten Halbleiterschalter 150 sind rückwärts nicht sperrfähig und können jeweils mittels eines gängigen Bipolartransistors, eines Bipolartransistors mit isolierter Gate-Elektrode oder eines Metall-Oxid-Halbleiter-Feldeffekttransistors realisiert werden.

## Patentansprüche

1. Batterie (11) mit mindestens einem Batteriestrang (20), wobei in dem Batteriestrang (20) mehrere in Reihe schaltbare Batteriemodule (30) mit jeweils mindestens einer Batteriezelle angeordnet sind, der Batteriestrang (20) mittels mindestens einer dem Batteriestrang (20) zugeordneten Trenneinrichtung (140) zwischen den ihm zugeordneten Batteriestrangterminals (21, 22) zuschaltbar beziehungsweise von den ihm zugeordneten Batteriestrangterminals (21, 22) entkoppelbar ausgebildet ist, , **dadurch gekennzeichnet, dass** die Trenneinrichtung (140) als eine bidirektional sperrfähige Schalteinrichtung ausgebildet ist, wobei in der Trenneinrichtung (140) im Strompfad eines Batteriestrangstroms ein Halbleiterschalter (150) angeordnet ist und die Trenneinrichtung (140) ferner dazu ausgebildet ist, mittels Schalten des Halbleiterschalters (150) den Strom durch den Batteriestrang (20) unabhängig von seiner Stromrichtung zu schalten.

2. Batterie (11) nach Anspruch 1, wobei die Batterie (11) mit einem Verbraucher, insbesondere einem Elektromotor verbindbar ist.

3. Batterie (11) nach Anspruch 1 oder 2, wobei der Halbleiterschalter (150) dazu ausgebildet ist, einen durch ihn in Vorwärtsrichtung fließenden Strom zu jedem beliebigen Zeitpunkt abzuschalten.

4. Batterie (11) nach einem der Ansprüche 1, 2 oder 3, wobei der Halbleiterschalter (150) rückwärts nur begrenzt sperrfähig oder nicht sperrfähig ist und insbesondere einen Bipolartransistor, vorzugsweise einen Bipolartransistor mit isolierter Gate-Elektrode, oder einen Feldeffekttransistor, vorzugsweise einen Metall-Oxid-Halbleiter-Feldeffekttransistor, umfasst.

5. Batterie (11) nach einem der vorangehenden Ansprüche, wobei dem Halbleiterschalter (150) eine von der Trenneinrichtung (140) umfasste Diodenbrücke (160) zugeordnet ist, die mit dem Batteriestrang (20) und mit dem Halbleiterschalter (150) derartig verbunden ist, dass ein durch den Halbleiterschalter (150) fließender Strom immer vorwärts durch den Halbleiterschalter (150) fließt, unabhängig von der Richtung des Stroms durch den Batteriestrang (20).

6. Batterie (11) nach einem der vorangehenden Ansprüche, wobei die Diodenbrücke (160) als Vollbrücke aus vier Dioden (161) ausgebildet ist.

7. Batterie (11) nach einem der vorangehenden Ansprüche, wobei die Trenneinrichtung (140) an einem Ende des Batteriestrangs (20) angeordnet ist, so dass sie mit dem positiven (21) oder mit dem negativen Batteriestrangterminal (22) verbunden ist, oder zwischen zwei beliebigen Batteriemodulen (30) des Batteriestrangs (20) angeordnet und mit diesen angrenzenden zwei Batteriemodulen (30) jeweils direkt verbunden ist.

8. Batterie (11) nach einem der vorangehenden Ansprüche, wobei die Trenneinrichtung (140) ferner auch als Ladeeinrichtung ausgebildet ist, die mindestens zwei bidirektionale Schalteinrichtungen umfasst, wobei eine der zwei bidirektionalen Schalteinrichtungen parallel zu einer Reihenschaltung aus der anderen der zwei bidirektionalen Schalteinrichtungen und einem Vorladewiderstand geschaltet ist.

9. Batterie (11) nach einem der vorangehenden Ansprüche, wobei die Batterie (11) ferner derart ausgebildet ist, dass zur Erzeugung einer einstellbaren Ausgangsspannung des Batteriestranges (20) die Batteriemodule (30) des Batteriestranges (20) zu dem Batteriestrang (20) zuschaltbar und wieder überbrückbar ausgebildet sind.

10. Batterie (11) nach einem der vorangehenden Ansprüche, wobei die Batterie (11) eine Lithium-Ionen-Batterie ist.

11. Kraftfahrzeug, das eine Batterie (11) nach einem der vorangehenden Ansprüche und einen Elektromotor aufweist, wobei die Batterie (11) mit dem Elektromotor verbunden ist.

## Claims

1. Battery (11) comprising at least one battery string (20), wherein a plurality of battery modules (30) which can be connected in series and each have at least one battery cell are arranged in the battery string (20), and the battery string (20) is embodied such that, by means of at least one disconnecting device (140) assigned to the battery string (20), said battery string can be connected between the battery string terminals (21, 22) assigned to it or can be decoupled from the battery string terminals (21, 22) assigned to it, **characterized in that** the disconnecting device (140) is embodied as a switching device having bidirectional blocking capability, wherein a semiconductor switch (150) is arranged in the disconnecting device (140) in the current path of a battery string current and the disconnecting device (140) is furthermore designed to switch the current through the battery string (20) independently of its current direction by means of the switching of the semiconductor switch (150).

2. Battery (11) according to Claim 1, wherein the battery (11) can be connected to a load, in particular an electric motor.

3. Battery (11) according to Claim 1 or 2, wherein the semiconductor switch (150) is designed to turn off a current flowing through it in the forward direction at any desired point in time.

4. Battery (11) according to any of Claims 1, 2 or 3, wherein the semiconductor switch (150) has only limited or no reverse blocking capability and comprises in particular a bipolar transistor, preferably an insulated gate bipolar transistor, or a field effect transistor, preferably a metal oxide semiconductor field effect transistor.

5. Battery (11) according to any of the preceding claims, wherein a diode bridge (160) that the disconnecting device (140) comprises is assigned to the semiconductor switch (150), said diode bridge being connected to the battery string (20) and to the semiconductor switch (150) in such a way that a current flowing through the semiconductor switch (150) always flows through the semiconductor switch (150) in the forward direction, independently of the direction of the current through the battery string (20).

6. Battery (11) according to any of the preceding claims, wherein the diode bridge (160) is embodied as a full bridge comprising four diodes (161).

7. Battery (11) according to any of the preceding claims, wherein the disconnecting device (140) is arranged at one end of the battery string (20), such that it is connected to the positive (21) or to the negative battery string terminal (22), or is arranged between two arbitrary battery modules (30) of the battery string (20) and is in each case directly connected to these adjacent two battery modules (30).

8. Battery (11) according to any of the preceding claims, wherein the disconnecting device (140) is furthermore also embodied as a charging device comprising at least two bidirectional switching devices, wherein one of the two bidirectional switching devices is connected in parallel with a series circuit comprising the other of the two bidirectional switching devices and a precharging resistor.

9. Battery (11) according to any of the preceding claims, wherein the battery (11) is furthermore designed in such a way that, for generating an adjustable output voltage of the battery string (20), the battery modules (30) of the battery string (20) are embodied such that they can be connected into the battery string (20) and can be bridged again.

10. Battery (11) according to any of the preceding claims, wherein the battery (11) is a lithium-ion battery.

11. Motor vehicle comprising a battery (11) according to any of the preceding claims and an electric motor, wherein the battery (11) is connected to the electric motor.

## Revendications

1. Batterie (11) comprenant au moins un banc de batteries (20), dans lequel plusieurs modules de batterie (30) qui peuvent être montés en série et comprennent chacun au moins un élément de batterie sont disposés dans le banc de batteries (20), le banc de batteries (20) est conçu de manière à pouvoir être raccordé, au moyen d'au moins un dispositif de séparation (140) associé au banc de batteries (20), entre les bornes (21, 22) du banc de batteries qui lui sont associées ou être découplé des bornes (21, 22) du banc de batteries qui lui sont associées, **caractérisée en ce que** le dispositif de séparation (140) est réalisé sous la forme d'un dispositif de commutation bidirectionnel à capacité de blocage, dans lequel un commutateur à semi-conducteurs (150) est disposé sur le trajet de courant d'un courant du banc de batteries dans le dispositif de séparation (140) et le dispositif de séparation (140) est en outre réalisé de manière à faire passer le courant à travers le banc de batteries (20) indépendamment par commutation du commutateur à semi-conducteurs (150) de son sens de conduction du courant.

2. Batterie (11) selon la revendication 1, dans laquelle la batterie (11) peut être connectée à un dispositif consommateur, notamment à un moteur électrique.

3. Batterie (11) selon la revendication 1 ou 2, dans laquelle le commutateur à semi-conducteurs (150) est conçu pour déconnecter un courant passant en sens direct en tout point dans le temps.

4. Batterie (11) selon l'une quelconque des revendications 1, 2 ou 3, dans laquelle le commutateur à semi-conducteurs (150) n'est rendu non passant ou n'est rendu passant en sens inverse que de manière limitée et comprend un transistor bipolaire, de préférence un transistor bipolaire à électrode de grille isolée, ou un transistor à effet de champ, de préférence un transistor à effet de champ à semiconducteur à oxyde métallique.

5. Batterie (11) selon l'une quelconque des revendications précédentes, dans laquelle, au commutateur à semi-conducteurs (150) est associé un pont de diodes (160), faisant partie du dispositif de séparation (140), qui est connecté au banc de batteries (20) et au commutateur à semi-conducteurs (150) de manière à ce qu'un courant passant à travers le commutateur à semi-conducteurs (150) passe toujours en sens direct à travers le commutateur à semi-conducteurs (150), indépendamment du sens du courant passant à travers le banc de batteries (20).

6. Batterie (11) selon l'une quelconque des revendications précédentes, dans laquelle le pont de diodes (160) est réalisé sous la forme d'un pont complet constitué de quatre diodes (161).

7. Batterie (11) selon l'une quelconque des revendications précédentes, dans laquelle le dispositif de séparation (140) est disposé à une extrémité du banc de batteries (20) de manière à ce qu'il soit connecté par la borne de banc de batteries positive (21) ou négative (22), ou est disposé entre deux modules de batterie (30) quelconques du banc de batteries (20) et qu'il soit directement connecté à celui-ci de manière adjacente à deux modules de batterie (30) respectifs.

8. Batterie (11) selon l'une quelconque des revendications précédentes, dans laquelle le dispositif de séparation (140) est en outre réalisé sous la forme d'un dispositif de charge qui comprend au moins deux dispositifs de commutation bidirectionnels, dans lequel l'un des deux dispositifs de commutation bidirectionnels est connecté en parallèle à une connexion en série constituée de l'autre des deux dispositifs de commutation bidirectionnels et d'une résistance de pré-charge.

9. Batterie (11) selon l'une quelconque des revendications précédentes, dans laquelle la batterie (11) est en outre conçue de manière à ce que, pour générer une tension de sortie réglable du banc de batteries (20), les modules de batterie (30) du banc de batteries (20) sont réalisés de manière à pouvoir être raccordés au banc de batteries (20) et de manière à pouvoir de nouveau être pontés.

10. Batterie (11) selon l'une quelconque des revendications précédentes, dans laquelle la batterie (11) est une batterie au lithium-ions.

11. Véhicule à moteur comportant une batterie (11) selon l'une quelconque des revendications précédentes et un moteur électrique, dans lequel la batterie (11) est connectée au moteur électrique.
